# EUROPÄISCHE PATENTSCHRIFT

(11) **EP 1 772 558 B1**
(45) Veröffentlichungstag und Bekanntmachung des Hinweises auf die Patenterteilung: **17.11.2010**
(21) Anmeldenummer: 06019742.3
(22) Anmeldetag: 21.09.2006
(51) Int. Cl.: E01B 31/18, C21D 9/34, C21D 1/667

(54) **Vorrichtung zur gezielten Wärmebehandlung von Eisenbahn-Schienenrädern**
Apparatus for selective heat treatment of railway wheels
Dispositif pour traitement thermique selective des roues de chemin de fer

(30) Priorität: 07.10.2005 DE 202005015907 U
(43) Veröffentlichungstag der Anmeldung: 11.04.2007
(73) Patentinhaber: HEESS GmbH & Co. KG, 68623 Lampertheim (DE)
(72) Erfinder: Streng, Thomas, 64625 Bensheim (DE); Geppert, Michael, 67593 Westhofen (DE)
(74) Vertreter: Blumbach - Zinngrebe

(56) Entgegenhaltungen:
- EP-A1- 1 215 291
- EP-A2- 0 116 359
- DE-A1- 2 017 632
- DE-B1- 1 508 362
- US-A- 3 284 251

## Beschreibung

Die Erfindung betrifft eine Vorrichtung zur gezielten Wärme- oder Temperaturbehandlung von Eisenbahn-Schienenrädern oder anderen Stahlrädern.

Herkömmlicherweise wird bei Stahl umfassenden Werkstücken das Härten angewendet, um diesen je nach spezifischem späterem Einsatz eine ausreichende oder vorbestimmte Härte und Festigkeit gegenüber mechanischen Beanspruchungen, wie beispielsweise statischer oder dynamischer Verformung durch Zug, Druck, Biegung, Stoß und/oder Verschleiß, zu verleihen.

Beim Härten eines Werkstückes wird dieses nach Erwärmung auf eine werkstoffspezifische Härtetemperatur durch Zufuhr von Kühlmedien abgekühlt. Gegebenenfalls wird das auf Härtetemperatur erwärmte Werkstück zunächst eine Zeitlang auf dieser Temperatur entsprechend werkstoffspezifischer Voraussetzungen gehalten. Grundsätzlich kann die erzielbare Festigkeit beim Härten durch Erhöhung der Feinkörnigkeit verbessert werden, welches durch Steuerung des zeitlichen Abkühlvorgangs bis hin zum schockartigen Abschrecken beeinflussbar ist. Bei langsamen Abkühlgeschwindigkeiten, beispielsweise bei Verwendung von Raumtemperatur, bildet sich häufig ein perlitisches Gefüge aus, wohingegen es bei schnellen Abkühlgeschwindigkeiten, z.B. bei "schockartigem" Abschrecken, durch entsprechende Kühlmedien zur Bildung eines martensitischen Gefüges kommt, welches zu hoher Festigkeit führt. Ein wesentliches Ziel des Härtens ist es somit, durch Wärmebehandlung die Gefügestruktur des zu härtenden Werkstücks gemäß einer gewünschten Festigkeit einzustellen.

Nach dem Härten schließt sich ggf. der Schritt des Anlassens an, bei welchem das Werkstück wiederum auf eine bestimmte Temperatur erwärmt wird und daraufhin erneut auf Raumtemperatur abgekühlt wird. Hierdurch können je nach Anlasstemperatur beim Härten entstandene Spannungen ausgeglichen und eine Vergütung bewirkt werden, wobei die Härte verringert, jedoch die Zähigkeit des Stahls erhöht wird.

Es ist bekannt, die Lauffläche von Eisenbahnrädern und ähnlichen Rädern zu härten, während sich das zuvor auf Härtetemperatur erwärmte Rad in einer Laufkranzhärtemaschine dreht, wobei diesbezüglich unter anderem auch auf die deutsche Offenlegungsschrift 19 33 781 verwiesen wird. Die dort offenbarte Vorrichtung weist eine Drehapparatur mit Abschreckvorrichtung für die Lauffläche des Laufkranzes eines Rades auf. Zwar kann durch das gezielte Abschrecken der Lauffläche in Abhängigkeit der Abschrecktemperatur und -zeit bis zu einer bestimmten Tiefe unter der Lauffläche eine bestimmte Festigkeit im Laufkranz erreicht werden. Die Drehapparatur weist zwar ferner eine weitere Abschreckvorrichtung für die Nabe und das Blatt Rades auf, jedoch bildet sich insbesondere im Inneren des in Bezug auf das Blatt massiven bzw. voluminösen Laufkranzes stets ein relativ abrupter Übergang von einer vollständig martensitischen Gefügestruktur hin zu einer perlitischen Gefügestruktur aus. Da sich ferner der perlitisch gehärtete Bereich nicht nur im Werkstückinneren, sondern auch bis zu den Werkstückaußenflächen erstreckt, ist aufgrund der damit einhergehenden weicheren Oberflächenstruktur ein schnellerer Verschleiß möglich.

Die EP 1 215 291 beschreibt ein Verfahren und eine Vorrichtung zum Abkühlen und Behandeln von rotationssymmetrischen Stahlkörper mit dem ein Härteprozess durchführbar ist,

mit welchem ein sich während des Härtens der Lauffläche eines Eisenbahn-Schienenrades oder anderen Stahlrades einstellender Gefügestrukturwechsel weniger abrupt und somit ein damit einhergehender Gefügespannungslevel wesentlich reduziert wird. Das Schienenrad wird dabei durch Düseneinrichtungen sowohl im Bereich seiner Lauffläche als auch seiner Stirnseite mit einem Kühlmedium beaufschlagt.

Aufgabe der Erfindung ist es, die Positioniergenauigkeit der Sprühdüsen gegen über dem Stand der Technik zu erhöhen und damit die Einstellung gewünschter, lokal unterschiedlicher Gefügezustände in Laufrädern nach einer entsprechenden Wärmebehandlung zu verbessern.

Die erfindungsgemäße Lösung ist durch eine Vorrichtung mit den Merkmalen des Anspruches 1 gegeben. Vorteilhafte und/oder bevorzugte Ausführungsformen und Weiterbildungen sind Gegenstand der Unteransprüche.

Erfindungsgemäß umfasst somit eine Vorrichtung zur Wärme- oder Temperaturbehandlung eines Eisenbahn-Schienenrades oder anderen Stahlrades, welches einen Laufkranz mit einer Lauffläche und zwei in einem Winkel zur Lauffläche, insbesondere im Wesentlichen senkrecht zur Lauffläche, angeordneten Laufkranz-Stirnflächen umfasst, zusätzlich zu einer Einrichtung zum Härten der Lauffläche wenigstens eine Einrichtung zum gezielten Aufhärten einer Übergangszone zwischen der Lauffläche und wenigstens einer der Laufkranz-Stirnflächen.

Mittels einer solchen Vorrichtung kann durch das gezielte Aufhärten folglich äußerst effektiv bei einem zumindest im Bereich des Laufkranzes auf Härtetemperatur erwärmten Rades zwischen der Lauffläche des Laufkranzes und der Laufkranz-Stirnfläche ein Übergangsbereich von einer martensitisch gehärteten Lauffläche mit zweckmäßiger Weise vollständig martensitischer Gefügestruktur hin zu einem perlitisch gehärteten Laufkranz-Stirnflächenbereich erzeugt werden, der einen wesentlich geringeren Gefügespannungslevel aufweist. Da sich folglich auch im äußeren Kantenbereich des Laufkranzes zwischen Lauffläche und Laufkranz-Stirnfläche ein deutlich gesenkter Gefügespannungslevel einstellt, sinkt die Kantenbruchneigung und verlängert sich die Standzeit des Rades. Insbesondere in Bezug auf diese Kantenaußenseiten des Laufkranzes ist somit das erfindungsgemäße Aufhärten zum Erzeugen einer maximalen nach dem Härten erreichbaren Härte effektiv.

Um die Einrichtung zum Härten sowie die Einrichtung zum Aufhärten der Übergangszone unterschiedlichen Laufkranz-Durchmessern und Abmessungen anzupassen, sieht die Erfindung zweckmäßigerweise vor, diese Einrichtungen jeweils mit einer Anzahl von in Bezug auf die Lauffläche bzw. in Bezug auf die Laufkranz-Stirnfläche einstellbaren Düsen zum Aufbringen eines Kühlmediums, wie zum Beispiel Wasser oder Öl, auszubilden.

Da ferner derartige Schienenräder oder andere Stahlräder herkömmlicherweise senkrecht oder horizontal in Härtevorrichtungen nach Erwärmung auf Härtetemperatur aufgenommen wird oder im Falle einer von der Vorrichtung mit umfassten Aufheizeinrichtung bereits vor dem Aufheizen auf Härtetemperatur senkrecht oder horizontal aufgenommen wird, sind die Einrichtungen zum Härten sowie zum Aufhärten wenigstens entlang einer horizontalen und einer vertikalen Achse verfahrbar gelagert. Um nicht entlang des gesamten Laufkranzes derartige Einrichtungen zu positionieren, ist die Vorrichtung ferner zweckmäßigerweise mit einer Dreheinrichtung zum Drehen des Rades während des Härtens ausgebildet.

Zweckmäßigerweise ist diese Dreheinrichtung zur horizontalen Aufnahme des Rades ausgebildet, so dass sich eine bestimmte Anzahl von Einrichtungen zum Härten und zum Aufhärten entlang des Laufkranzes im Wesentlichen entlang einer horizontalen Ebene befinden und welches insgesamt die Anforderungen an die Statik der erfindungsgemäßen Vorrichtung deutlich verringert.

Umfasst darüber hinaus die Dreheinrichtung eine Anzahl von entlang wenigstens eines Kreises angeordnete und um jeweils eine radial ausgerichtete, horizontale Achse drehbar gelagerte Rollen oder Walzen zur Auflage des Rades, können auch auf einfache Weise unterschiedlich dimensionierte Räder ohne jeweils ansonsten notwendige Anpassung eines in die Radnabe einfahrbaren Einspannzapfens aufgenommen werden.

Zur weiteren Erhöhung der Flexibilität von aufzunehmenden unterschiedlich dimensionierten Rädern unterschiedlicher Größen sind die Rollen oder Walzen ferner bevorzugt radial verfahrbar angeordnet. Zum Einstellen der Düsen in Bezug auf die Lauffläche und auf die Laufkranz-Stirnfläche ist den Düsen wenigstens eine positionssteuernde Einrichtung zur vorgebbaren Ausrichtung in Bezug auf den Laufkranz zugeordnet. Diese umfassen gemäß bevorzugten Ausführungsformen zumindest einen Sensor und/oder Anlagemittel, so dass das Erreichen einer vorgegebenen gewünschten Positionierung und Ausrichtung der Düsen für die gezielte Wärmebehandlung sensorisch erfasst oder durch entsprechende Anlage der Mittel am Laufkranz angezeigt wird. Als Sensoren eignen sich insbesondere berührungsfreie Sensoren aber auch Drucksensoren.

In weiterer zweckmäßiger Weiterbildung ist ferner vorgesehen, dass die von der Einrichtung zum Härten umfassten Düsen und die von der Einrichtung zum Aufhärten umfassten Düsen unabhängig voneinander positionierbar und/oder in Bezug auf die Kühlmediumzufuhr ansteuerbar sind. In weiterer zweckmäßiger Weiterbildung ist ferner vorgesehen, dass die erfindungsgemäße Vorrichtung eine Schutzeinrichtung zur Verhinderung der Einwirkung der Einrichtungen zum Härten und Aufhärten auf weitere Außenbereiche des Rades umfasst. Zum einen wird hierdurch das gezielte Härten und Aufhärten von lediglich Laufkranzbereichen gewährleistet und zum anderen kann eine in nicht abgeschreckten Bereichen des Rades verbleibende Wärme nach dem Härtevorgang anschließend wieder zum ggf. erwünschten Anlassen der gehärteten Bereiche verwendet werden, so dass ein erneutes Aufheizen des in der Regel massiv voluminösen Laufkranzes zur Vergütung nicht notwendig ist.

Gemäß einer weiteren bevorzugten Ausführungsform ist ferner vorgesehen, dass die Vorrichtung eine Einrichtung zum Zuführen von Luft, insbesondere Raumtemperaturluft, an gegenüber dem Laufkranz radial innenliegende Bereiche des Rades umfasst. Hierdurch ist ein langsames Abkühlen dieser Bereiche zusätzlich steuerbar.

Die Erfindung wird nachfolgend anhand einer bevorzugten Ausführungsform unter Bezugnahme auf die beigefügten Zeichnungen näher beschrieben. In den Zeichnungen zeigen:
Fig. 1 eine Schnittansicht durch eine erfindungsgemäße Vorrichtung von oben und
Fig. 2 einen Schnitt parallel der Linie A-A aus Fig. 1.

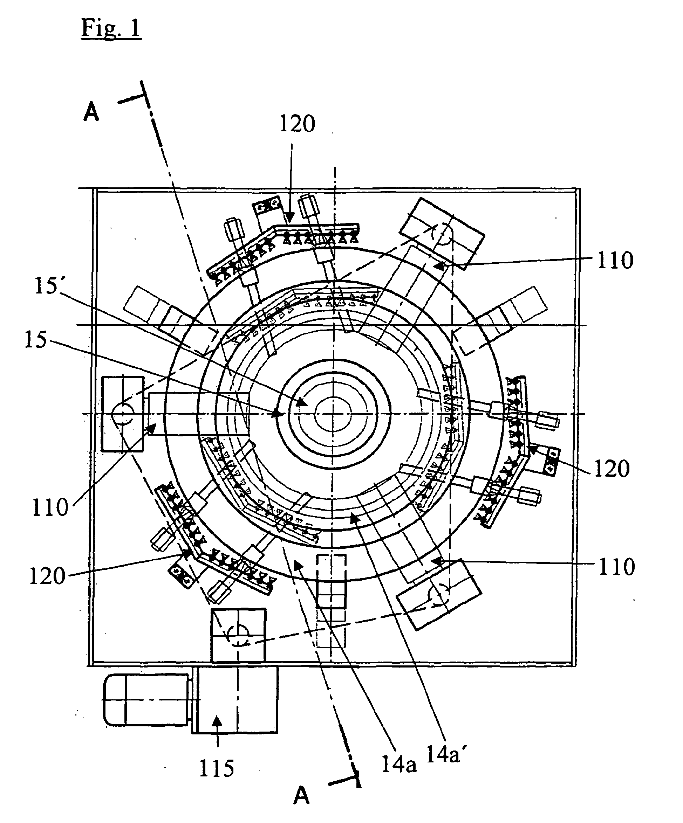

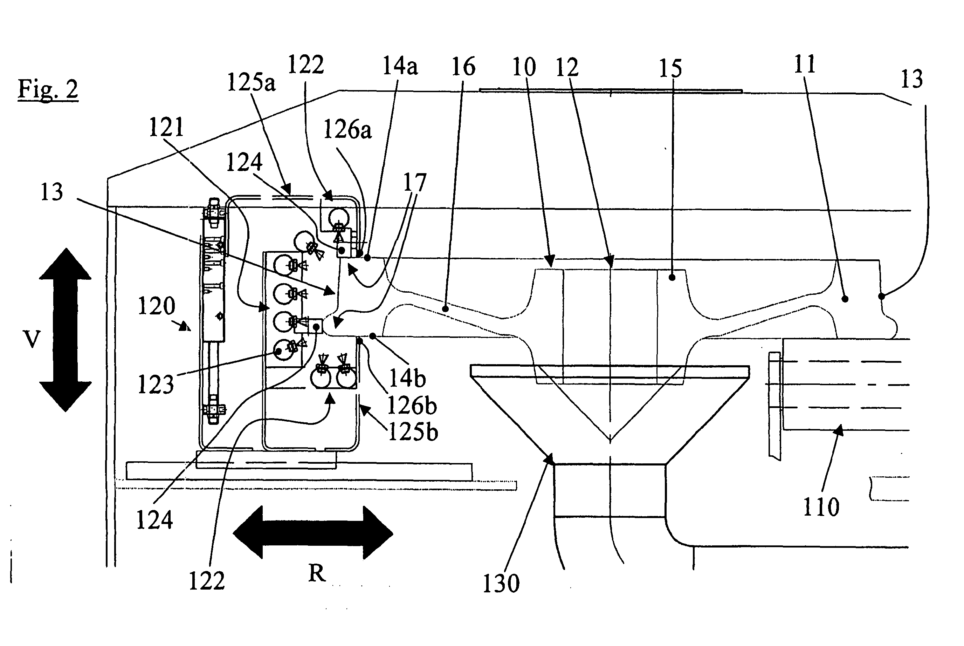

Nachfolgend wird auf die Figuren 1 und 2 Bezug genommen, welche eine erfindungsgemäße Vorrichtung zur gezielten Temperaturbehandlung skizzenhaft darstellen.

In Fig. 2 ist ein erfindungsgemäß zu bearbeitendes Eisenbahn-Schienenrad 10 aufgenommen. Das Schienenrad 10 liegt mit seinem Laufkranz 11 auf Walzen 110 auf. Gemäß Fig. 1 sind drei solche Walzen 110 entlang eines Kreises angeordnet, wobei die jeweiligen Drehachsen horizontal radial ausgerichtet sind. Die Walzen sind ferner zweckmäßigerweise entlang der jeweiligen Drehachse beweglich bzw. verfahrbar, um zur Aufnahme von Schienenrädern unterschiedlichen Durchmessers entsprechend radial nach innen oder außen bewegt zu werden.

Durch Drehung der Walzen 110 um deren horizontale Drehachse mittels einer mit den Walzen 110 gekoppelten Antriebseinheit 115 kann das Schienenrad 10 horizontal um die Schienenradachse 12 gedreht werden.

Die erfindungsgemäße Vorrichtung weist ferner drei Einheiten 120 auf, die jeweils Einrichtungen 121 zum Härten der Lauffläche 13 des Laufkranzes 11 sowie Einrichtungen 122 zum gezielten Aufhärten des Kantenbereiches zwischen der Lauffläche 13 und beiden Laufkranz-Stirnflächen 14a und 14a auf. Die Einheiten 120 sind jeweils zwischen zwei Walzen 110 und ebenfalls entlang eines Kreises angeordnet. Wie aus Fig. 1 zu sehen, kann jede der Einheiten 120 aus der deutlich hervorgehobenen Position ebenfalls radial nach innen in die abgeschwächt dargestellte Position bewegt werden und zurück, um in eine einem jeweiligen Durchmesser eines aufgenommenen Schienenrades 10 zur erfindungsgemäßen Temperaturbehandlung entsprechend ausgerichtete Position in Bezug auf den Laufkranz 11 gefahren zu werden. Zur Verdeutlichung sind in Fig. 1 zwei unterschiedlich dimensionierte Schienenräder in unterschiedlich gehaltener Strichstärke skizziert und deren Nabe und obere Laufkranzstirnfläche jeweils mit 15 und 14a bzw. 15' und 14a' gekennzeichnet.

Bei Fig. 2 ist die radiale Verfahrbarkeit der Einheiten 120 durch den mit "R" gekennzeichneten Doppelpfeil angedeutet. Ferner kann jede der Einheiten 120 in vertikaler Richtung, wie bei Fig. 2 mit dem durch "V" gekennzeichneten Doppelpfeil angezeigt, in vertikaler Richtung verfahren werden, so dass eine Positionierung entsprechend der jeweiligen Abmessung des aufzunehmenden Schienenrades einnehmbar ist.

Die Einrichtungen zum Härten und zum gezielten Aufhärten 121 bzw. 122 umfassen jeweils eine Anzahl von Düsen 123 zum Aufbringen eines Kühlmediums, beispielsweise von Wasser oder Öl, die zweckmäßigerweise zur Feinpositionierung jeweils unabhängig voneinander in Bezug auf den Laufkranz 11 vertikal und horizontal einstellbar und positionierbar sind. Auch die Zufuhr des Kühlmediums, insbesondere in Bezug auf die Druckbeaufschlagung und die zeitliche Zuführung ist individuell und jeweils unabhängig voneinander mittel einer nicht dargestellten Steuereinrichtung vorgebbar.

Ferner umfasst jede Einheit 120 bei der vorliegenden Ausführungsform Anschlagmittel 124, über welche ein Mindestabstand zwischen den Düsen 123 und dem Laufkranz einstellbar ist. Die der Einrichtung 121 zugeordneten Düsen 123 werden in Bezug auf die Lauffläche 13 positioniert, und die der Einrichtung 122 zugeordneten Düsen 123 in Bezug auf die Laufkranz-Stirnflächen 14a und 14b.

Jede der Einheiten 120 umfasst ferner eine Schutzeinrichtung, die bei dem vorliegenden Ausführungsbeispiel mehrere gebogene Schutzbleche 125a und 125b umfasst. Das gemäß Fig. 2 obere Schutzblech 125a liegt mit einem Ende 126a von oben her auf der oberen Laufkranz-Stirnfläche 14a des Schienenrades 10 auf oder nahezu auf und das untere Schutzteilblech 125b mit einem Ende 126b von unten her an der unteren Laufkranz-Stirnfläche 14b des Schienenrades 10 an oder nahezu an.

Bevorzugt sind die von oben und von unten an die jeweilige Laufkranzstirnfläche 14a bzw. 14b Schutzeinrichtungskomponenten ebenfalls wie bei Fig. 2 mit dem durch "V" gekennzeichneten Doppelpfeil angezeigt, in vertikaler Richtung und unabhängig voneinander verfahrbar oder beweglich, so dass eine jeweilige Positionierung entsprechend der Dickenabmessung des Laufkranzes einnehmbar ist. Hierdurch ist gewährleistet, wie bei Fig. 2 zu sehen, dass über die Düsen 123 zugeführtes Kühlmedium gezielt auf die entsprechenden Laufkranz-Flächen 13, 14a und 14b aufbringbar ist, ohne im Wesentlichen auf die radial weiter innen liegenden Außenbereiche des Schienenrades 10 von außen her einzuwirken.

Ein insgesamt auf eine Härtetemperatur erwärmtes Schienenrad 10 kühlt somit bei der dargestellten Ausführungsform von der Nabe 15 über das Blatt 16 bis hin zum Laufkranz 11 nur langsam ab, so dass sich im Wesentlichen eine perlitische Gefügestruktur ausbildet. Die mittels den Einrichtungen 121 und 122 gekühlten Laufkranz-Außenseiten werden dahingehend abgeschreckt oder "schockartig" abgekühlt, so dass sich im Bereich ausgehend von der Lauffläche 13 zunächst ein volmartensitisches Gefüge ausgebildet und in der Übergangszone 17 zwischen der Lauffläche 13 und den Stirnflächen 14A und 14B ein Übergangsbereich 17 von der vollmartensitischen hin zu einer perlitischen Gefügestruktur ausbildet und sich in Folge im Kantenbereich ein wesentlich reduziertes Spannungsgefüge einstellt.

Darüber hinaus kann die nach einem Abschrecken der Lauffläche 13 und der sich von der Lauffläche aus erstreckenden Kantenbereiche der Laufkranz-Stirnflächen 14a und 14b in den übrigen Teilen des Schienenrades 10 noch verbleibende Restwärme für einen ggf. erwünschten Anlassprozess, insbesondere zur Vergütung der Lauffläche 13 sowie des Übergangsbereiches 17 nutzen.

Unterhalb der Nabe 15 und axial mit der Drehachse 12 des Schienenrades 10 ausgerichtet ist ferner ein Lüftungstrichter 130 angeordnet, über welchen bei Bedarf zusätzlich Luft an das Schienenrad geblasen werden kann.

### Bezugszeichenliste

- 10: Schienrad
- 11: Laufkranz
- 12: Drehachse
- 13: Lauffläche
- 14a, 14b: Laufkranz-Stirnfläche
- 15: Nabe
- 16: Blatt
- 17: Übergangsbereich
- 110: Walzen
- 115: Antriebseinheit
- 120: Härteeinheit
- 121: Laufkranz-Härteeinrichtung
- 122: Laufkranz-Stirnflächen Aufhärteeinrichtung
- 123: Düsen
- 124: Anschlagmittel
- 125a, 125b: Schutzeinrichtung
- 126a, 126b: Enden der Schutzeinrichtung
- 130: Lüftungstrichter

## Patentansprüche

1. Vorrichtung zur gezielten Temperaturbehandlung eines Eisenbahn-Schienenrades (10) oder anderen Stahlrades, welches einen Laufkranz (11) mit einer Lauffläche (13) und zwei quer zur Lauffläche (13) angeordneten Laufkranzstirnflächen (14a, 14b) umfasst, mit wenigstens einer Einrichtung (120, 121) zum Härten der Lauffläche und **gekennzeichnet durch** wenigstens eine Einrichtung (120, 122) zum gezielten Aufhärten einer Übergangszone zwischen der Lauffläche und wenigstens einer der Laufkranzstirnflächen des Eisenbahn-Schienenrades,
wobei die Einrichtung (120, 121) zum Härten und die Einrichtung (120, 122) zum gezielten Aufhärten jeweils eine Anzahl von in Bezug auf die Lauffläche (13) bzw. in Bezug auf die Laufkranz-Stirnfläche (14a, 14b) einstellbaren Düsen (123) zum Aufbringen eines Kühlmediums umfassen, und den Düsen (123) wenigstens eine positionssteuernde Einrichtung zur Ausrichtung der Düsen in Bezug auf den Laufkranz (11) zugeordnet ist, welche einen Sensor und/oder ein Anschlagmittel (124) umfasst, **dadurch gekennzeichnet, dass** bei Erreichen einer vorgegebenen gewünschten Positionierung und Ausrichtung der Düsen für die gezielte Wärmebehandlung dieses sensorisch erfasst oder die Mittel (124) am Laufkranz entsprechend anliegen.

2. Vorrichtung nach vorstehendem Anspruch, ferner **dadurch gekennzeichnet, dass** die von der Einrichtung zum Härten umfassten Düsen unabhängig zu den von der Einrichtung zum gezielten Aufhärten umfassten Düsen positionierbar sind.

3. Vorrichtung nach einem der zwei vorstehenden Ansprüche, ferner **dadurch gekennzeichnet, dass** die von der Einrichtung zum Härten umfassten Düsen unabhängig zu den von der Einrichtung zum gezielten Aufhärten umfassten Düsen in Bezug auf die Kühlmediumzufuhr ansteuerbar sind.

4. Vorrichtung nach einem der vorstehenden Ansprüche, ferner **gekennzeichnet durch** eine Schutzeinrichtung zur Verhinderung der Einwirkung der Einrichtungen zum Härten und Aufhärten auf weitere Außenbereiche des Rades.

5. Vorrichtung nach einem der vorstehenden Ansprüche, ferner **dadurch gekennzeichnet, dass** die Einrichtungen zum Härten (120, 121) und zum Aufhärten (120, 122) wenigstens entlang einer horizontalen und einer vertikalen Achse verfahrbar sind.

6. Vorrichtung nach einem der vorstehenden Ansprüche, ferner **gekennzeichnet durch** eine Dreheinrichtung auf welcher das Rad horizontal aufnehmbar ist.

7. Vorrichtung nach vorstehendem Anspruch, ferner **dadurch gekennzeichnet, dass** die Dreheinrichtung eine Anzahl von entlang eines Kreises angeordneten und um jeweils eine radial horizontale Achse drehbar gelagerten Rollen und/oder Walzen (110) zur Auflage des Rades umfasst.

8. Vorrichtung nach vorstehendem Anspruch, wobei die Rollen oder Walzen zur Aufnahme von Rädern unterschiedlicher Größen radial beweglich angeordnet sind.

9. Vorrichtung nach eine der vorstehenden Ansprüche, **gekennzeichnet durch** eine Einrichtung (130) zum Zuführen von Luft, insbesondere Raumluft, an gegenüber dem Laufkranz radial innenliegende Bereiche des Rades.

10. Vorrichtung nach eine der vorstehenden Ansprüche, **gekennzeichnet durch** eine Einrichtung zum Aufheizen des Rades auf Härtetemperatur.

## Claims

1. Apparatus for the targeted heat treatment of a railway track wheel (10) or other steel wheel which comprises a wheel tread (11) having a running surface (13) and two wheel tread end surfaces (14a, 14b) which are disposed transversely with respect to the running surface (13), having at least one device (120, 121) for hardening the running surfaces and **characterised by** at least one device (120, 122) for the targeted increased hardening of a transition zone between the running surface and at least one of the wheel tread end surfaces of the railway track wheel,
wherein the device (120, 121) for hardening and the device (120, 122) for targeted increased hardening each comprise a number of nozzles (123), which can be adjusted in relation to the running surface (13) or in relation to the wheel tread end surface (14a, 14b), for application of a cooling medium, and the nozzles (123) are allocated at least one position-controlling device for aligning the nozzles in relation to the wheel tread (11), which position-controlling device comprises a sensor and/or a stop means (124), **characterised in that** upon achievement of a specified desired positioning and alignment of the nozzles for the targeted heat treatment this [is] detected in a sensory manner or the means (124) lie correspondingly against the wheel tread.

2. Apparatus as claimed in the preceding claim, further **characterised in that** the nozzles which are encompassed by the device for hardening can be positioned independently with respect to the nozzles encompassed by the device for targeted increased hardening.

3. Apparatus as claimed in any one of the two preceding claims, further **characterised in that** the nozzles encompassed by the device for hardening can be controlled in relation to the cooling medium supply independently with respect to the nozzles encompassed by the device for targeted increased hardening.

4. Apparatus as claimed in any one of the preceding claims, further **characterised by** a protective device for preventing the devices for hardening and increased hardening from acting upon further external regions of the wheel.

5. Apparatus as claimed in any one of the preceding claims, further **characterised in that** the devices for hardening (120, 121) and for increased hardening (120, 122) can be moved at least along a horizontal axis and a vertical axis.

6. Apparatus as claimed in any one of the preceding claims, further **characterised by** a rotary device, on which the wheel can be received horizontally.

7. Apparatus as claimed in the preceding claim, further **characterised in that** the rotary device comprises a number of rollers and/or cylinders (110) for supporting the wheel which are disposed along a circle and are mounted so as to be able to rotate about a radially horizontal axis in each case.

8. Apparatus as claimed in the preceding claim, wherein the rollers or cylinders are disposed in a radially movable manner for receiving wheels of different sizes.

9. Apparatus as claimed in any one of the preceding claims, **characterised by** a device (130) for supplying air, in particular ambient air, to regions of the wheel located radially inwards with respect to the wheel tread.

10. Apparatus as claimed in any one of the preceding claims, **characterised by** a device for heating the wheel to hardening temperature.

## Revendications

1. Dispositif pour le traitement adéquat de la température d'une roue sur rails de chemin de fer (10) ou d'une autre roue en acier, qui comprend une bande de roulement (11) avec une surface de roulement (13) et deux faces frontales de bande de roulement (14a, 14b) disposées transversalement à la surface de roulement (13), présentant au moins un dispositif (120, 121) pour le durcissement de la surface de roulement et **caractérisé par** au moins un dispositif (120, 122) pour le durcissement par trempe adéquat d'une zone de transition entre la surface de roulement et au moins l'une des faces frontales de la bande de roulement de la roue sur rails de chemin de fer,
le dispositif (120, 121) pour le durcissement et le dispositif (120, 122) pour le durcissement par trempe adéquat comprenant respectivement un certain nombre de buses (123) réglables par rapport à la surface de roulement (13) ou par rapport à la face frontale de la bande de roulement (14a, 14b) pour l'application d'un agent de refroidissement, et au moins un dispositif contrôlant la position pour l'orientation des buses par rapport à la bande de roulement (11) étant attribué aux buses (123), lequel dispositif comporte un capteur et/ou un moyen de butée (124), **caractérisé en ce que**, lorsqu'on atteint un positionnement et une orientation souhaités prédéfinis des buses pour le traitement thermique adéquat, ce moment est détecté par capteur ou bien les moyens (124) s'appliquent de façon appropriée sur la bande de roulement.

2. Dispositif selon la revendication précédente, **caractérisé** également en ce que les buses incluses du dispositif pour le durcissement peuvent être positionnées indépendamment des buses incluses par le dispositif pour le durcissement par trempe adéquat.

3. Dispositif selon l'une quelconque des deux revendications précédentes, **caractérisé** également en ce que les buses incluses par le dispositif pour le durcissement peuvent être activées en ce qui concerne l'arrivée d'agent réfrigérant indépendamment des buses incluses par le dispositif pour le traitement par trempe adéquat.

4. Dispositif selon l'une quelconque des revendications précédentes, **caractérisé** également par un dispositif de protection pour empêcher l'effet des dispositifs pour le durcissement et le durcissement par trempe sur d'autres zones extérieures de la roue.

5. Dispositif selon l'une quelconque des revendications précédentes, **caractérisé** également en ce que les dispositifs pour le durcissement (120, 121) et pour le durcissement par trempe (120, 122) peuvent se déplacer au moins le long d'un axe horizontal et d'un axe vertical.

6. Dispositif selon l'une quelconque des revendications précédentes, **caractérisé** également par un dispositif rotatif sur lequel la roue peut être réceptionnée de façon horizontale.

7. Dispositif selon la revendication précédente, **caractérisé** également en ce que le dispositif rotatif comprend un nombre de galets et/ou de rouleaux (110) disposés le long d'un cercle et logés de façon à pouvoir tourner autour respectivement d'un axe radialement horizontal pour l'appui de la roue.

8. Dispositif selon la revendication précédente, les galets ou rouleaux pour le logement de roues de différentes tailles étant disposés de façon mobile dans le sens radial.

9. Dispositif selon l'une quelconque des revendications précédentes, **caractérisé par** un dispositif (130) pour l'arrivée d'air, en particulier de l'air ambiant, sur des zones de la roue, radialement intérieures par rapport à la bande de roulement.

10. Dispositif selon l'une quelconque des revendications précédentes, **caractérisé par** un dispositif pour le réchauffement de la roue à la température de trempe.
